# EUROPÄISCHE PATENTSCHRIFT

(11) **EP 1 481 018 B1**
(45) Veröffentlichungstag und Bekanntmachung des Hinweises auf die Patenterteilung: **29.11.2006**
(21) Anmeldenummer: 03706544.8
(22) Anmeldetag: 20.02.2003
(51) Int. Cl.: C08G 77/50, C09D 183/04

(54) **SI-GEBUNDENE WASSERSTOFFATOME AUFWEISENDE SILOXANCOPOLYMERE ALS ANTIMISTING ADDITIVE FÜR SILICONBESCHICHTUNGSZUSAMMENSETZUNGEN**
SILOXANE POLYMERS CONTAINING SI-BOUND HYDROGEN ATOMS AS ANTIMISTING ADDITIVES FOR SILICONE COATING COMPOSITIONS
UTILISATION DE COPOLYMERES DE SILOXANE, PRESENTANT DES ATOMES D'HYDROGENE LIES AU SILICIUM, COMME ADDITIFS ANTIBROUILLARD DANS DES COMPOSITIONS DE REVETEMENT DE SILICONE

(30) Priorität: 07.03.2002 DE 10210014
(43) Veröffentlichungstag der Anmeldung: 01.12.2004
(73) Patentinhaber: Wacker Chemie AG, 81737 München (DE)
(72) Erfinder: LAUTENSCHLAGER, Hans, 84533 Haiming (DE); STALLBAUER, Reinhard, 84367 Gumpersdorf (DE)
(74) Vertreter: Deffner-Lehner, Maria
(86) Internationale Anmeldenummer: PCT/EP2003/001761
(87) Internationale Veröffentlichungsnummer: WO 2003/074591

(56) Entgegenhaltungen:
- EP-A- 1 277 786
- EP-B- 1 008 615
- WO-A-01/98418
- WO-A-01/98420
- DE-A- 19 522 144
- DE-A- 19 629 053

## Beschreibung

Die Erfindung betrifft die Verwendung von Antimisting Additiven zur Reduktion der Aerosolbildung in vernetzbaren Siliconbeschichtungszusammensetzungen.

Ein Trend in der Siliconbeschichtungsindustrie ist die Erhöhung der Maschinengeschwindigkeit zur Steigerung der Produktivität. Werden Siliconbeschichtungen auf das Substrat bei höheren Geschwindigkeiten, beispielsweise von über 300 m/min, aufgebracht, können sich feine Sprühnebel des Siliconbeschichtungssystems bilden. Dieses Aerosol entsteht am Siliconauftragswerk. Diese Sprühnebelbildung erweist sich als ein ernstes Problem bei der weiteren Steigerung der Beschichtungsgeschwindigkeit.

Diese Sprühnebelbildung kann durch den Zusatz von sogenannten Antimisting Additiven zum Siliconbeschichtungssystem reduziert werden.

In EP-A 716 115 (Dow Corning Corp.) werden Antimisting Additive, die durch Reaktion einer Organosiliciumverbindung, einer Oxyalkylengruppen enthaltender Verbindung und eines Katalysators erhalten werden, beschrieben. Durch die Zugabe dieser Oxyalkylengruppen aufweisenden Umsetzungsprodukte zu vernetzbaren Siliconbeschichtungssystemen wird die Bildung von Aerosol in schnellen Beschichtungsprozessen reduziert.

WO 01/98418 (Dow Corning Corp.) offenbart eine flüssige Silicon Antimisting Zusammensetzung, die durch Umsetzung
(a) eines Organohydrogenpolysiloxans mit mindestens 3 Si-H-Gruppen (SiH) mit
(b) einer Verbindung mit mindestens 2 Alkenylgruppen (C=C) in
(c) Gegenwart eines Platinkatalysators und gegebenenfalls
(d) eines Inhibitors
in einem Verhältnis von SiH/C=C ≥ 4,6 erhalten wird.
Ein extrem großer Überschuss an Organohydrogenpolysiloxan (SiH) ist notwendig, damit es zu keiner Vergelung kommt. Dieser Überschuss beeinflusst die Release-Eigenschaften des Basis-Systems, der vernetzbaren Siliconbeschichtungszusammensetzung. Weiterhin muss zur Verhinderung einer Vergelung ein Inhibitor zugesetzt werden.

In US-A 6,265,497 (Wacker-Chemie GmbH) sind Si-gebundene Wasserstoffatome aufweisende Siloxancopolymere als Zwischenprodukt bei der Herstellung von Alkenylgruppen aufweisenden Siloxancopolymere beschrieben, die verzweigt sind und worin die Organopolysiloxanblöcke über Kohlenwasserstoffbrücken verbunden sind.

Es bestand die Aufgabe Antimisting Additive für Siliconbeschichtungszusammensetzungen bereitzustellen, die die Aerosolbildung in schnellen Beschichtungsprozessen reduzieren, die mit den Siliconbeschichtungszusammensetzungen gut mischbar sind und die die Siliconbeschichtungszusammensetzungen nicht beeinträchtigen. Die Aufgabe wird durch die Erfindung gelöst.

Gegenstand der Erfindung ist die Verwendung von Antimisting Additiven in vernetzbaren Siliconbeschichtungszusammensetzungen zur Reduktion der Aerosolbildung, dadurch gekennzeichnet, dass als Antimisting Additive Si-gebundene Wasserstoffatome aufweisende Siloxancopolymere herstellbar, indem eine mindestens drei aliphatische Doppelbindungen aufweisende Verbindung (1) der allgemeinen Formel

R² (CR³=CH₂)ₓ (I)

wobei R² einen dreiwertigen oder vierwertigen Kohlenwasserstoffrest mit vorzugsweise 1 bis 25 Kohlenstoffatomen je Rest, der ein oder mehrere von einander separate Heteroatome ausgewählt aus der Gruppe von Sauerstoff, Silizium und Titan enthalten kann,
R³ ein Wasserstoffatom oder einen Alkylrest mit 1 bis 6 Kohlenstoffatomen je Rest und
x 3 oder 4, bedeutet,
mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird,
wobei das eingesetzte Verhältnis von Si-gebundenem Wasserstoff im Organosiloxan (2) zu aliphatischer Doppelbindung in organischer Verbindung (1) 1,3 bis 10 beträgt,
und gegebenenfalls in einem zweiten Schritt
die so erhaltenen Si-gebundene Wasserstoffatome aufweisenden Siloxancopolymere mit Organopolysiloxan (4),
ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden,
eingesetzt werden.

Die Si-gebundenen Wasserstoffatome aufweisenden Siloxancopolymere und deren Herstellung sind in der eingangs zitierten US-A 6,265,497 beschrieben.

Die erfindungsgemäßen Antimisting Additive, die Alkenylgruppen aufweisenden Siloxancopolymere, haben den Vorteil, dass sie nicht nur die Aerosolbildung vernetzbarer Siliconbeschichtungszusammensetzungen in schnellen Beschichtungssystemen reduzieren sondern dass sie insbesondere in beliebigen Mengenverhältnissen homogen mit den vernetzbaren Siliconbeschichtungszusammensetzungen mischbar sind im Gegensatz zu den Polyglykolgruppen aufweisenden Antimisting Additiven gemäß der eingangs zitierten EP-A 716 115.

Weiterhin weisen die erfindungsgemäßen Antimisting Additive keine inhibierende Wirkung auf und sie sind lagerstabil. Die erfindungsgemäßen Antimisting Additive haben den Vorteil, dass sie vorab mit der Vernetzerkomponente (B) der vernetzbaren Siliconbeschichtungszusammensetzung abgemischt werden können. Sie sind damit einfach handhabbar und beeinträchtigen die Release-Eigenschaften des Basis-Systems, der vernetzbaren Siliconbeschichtungszusammensetzung, nicht.

Die erfindungsgemäßen, Si-gebundene Wasserstoffatome aufweisenden Siloxancopolymere besitzen vorzugsweise eine Viskosität von 2 bis 500 000 Pa.s bei 25°C, bevorzugt 10 bis 100 000 Pa.s bei 25°C, besonders bevorzugt 20 bis 10 000 Pa.s bei 25°C.

Eine bevorzugte Ausführung bei sehr viskosen Siloxancopolymeren ist die Herstellung der erfindungsgemäßen, Si-gebundene Wasserstoffatome aufweisenden Siloxancopolymere in inerten organischen Lösungsmitteln, bevorzugt Kohlenwasserstoffen mit einem Siedepunkt vorzugsweise unter 150°C, wie Toluol, Xylol, n-Hexan, n-Octan, i-Octan und Benzinfraktionen, in einer Konzentration von vorzugsweise 20-60 Gew.-% Siloxangehalt,
wobei höhere oder niedrigere Konzentrationen im Bereich vorliegender Erfindung mit eingeschlossen sind.

Bei dem erfindungsgemäßen Verfahren kann eine Art von Verbindung (1) oder verschiedene Arten von Verbindung (1) eingesetzt werden.

Als Verbindung (1) wird bevorzugt solche eingesetzt, bei der R² ein dreiwertiger Kohlenwasserstoffrest mit vorzugsweise 1 bis 25 Kohlenstoffatomen je Rest und x einen Wert von 3 bedeutet.

Das im erfindungsgemäßen Verfahren eingesetzte Organosiloxan (2) enthält vorzugsweise zwei Si-gebundene Wasserstoffatome je Molekül.

Es kann eine Art von Organosiloxanen (2) oder verschiedene Arten von Organosiloxan (2) eingesetzt werden.

Als Organosiloxan (2) wird vorzugsweise solches der allgemeinen Formel

HR₂SiO (SiR₂O)ₙSiR₂H (II),

wobei R vorzugsweise gleiche oder verschiedene, gegebenenfalls halogenierte Kohlenwasserstoffreste mit 1 bis 6 Kohlenstoffatomen je Rest und
n 0 oder eine ganze Zahl, besonders bevorzugt eine ganze Zahl von 50 bis 2000 bedeutet, wobei alle ganzen Zahlen zwischen 0 und 2000 als explizit genannt zu gelten haben,
eingesetzt.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecylrest, und Octadecylreste, wie der n-Octadecylrest; Cycloalkylreste, wie Cyclopentyl-, Cyclohexyl-, Cycloheptyl- und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für substituierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m- und p-Chlorphenylrest.

Beispiele für Alkylreste R³ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest, Hexylreste, wie der n-Hexylrest. Bevorzugt ist R³ ein Wasserstoffatom.

Beispiele für Verbindung (1), mit denen die erfindungsgemäßen Alkenylgruppen aufweisenden Siloxancopolymere herstellbar sind, sind
1,2,4-Trivinylcyclohexan,
1,3,5-Trivinylcyclohexan,
3,5-Dimethyl-4-vinyl-1,6-heptadien,
1,2,3,4-Tetravinylcyclobutan,
Methyltrivinylsilan,
Tetravinylsilan,
1,1,2,2-Tetraallyloxyethan,
wobei 1,2,4-Trivinylcyclohexan bevorzugt ist.

Beispiele für den Rest R² sind daher vorzugsweise solche der Formel 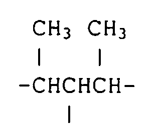 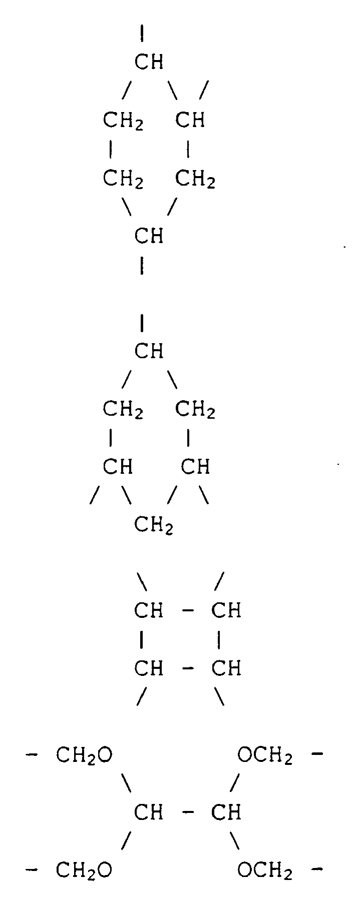 wobei der Rest der Formel 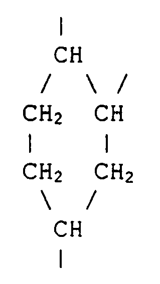 bevorzugt ist.

Organosiloxan (2) wird beim erfindungsgemäßen Verfahren in solchen Mengen eingesetzt, dass das Verhältnis von Si-gebundenem Wasserstoff in Organosiloxan (2) zu aliphatischer Doppelbindung in Verbindung (1) 1,3 bis 10, vorzugsweise 1,3 bis 5,0, bevorzugt 1,5 bis 4,0, besonders bevorzugt 1,6 bis 3,0 beträgt.

Da Organosiloxan (2) im Überschuss eingesetzt wird, reagieren daher in dem ersten Verfahrensschritt vorzugsweise alle aliphatische Doppelbindungen in der Verbindung (1) ab, und es werden Siloxancopolymere erhalten, die Si-gebundene Wasserstoffatome aufweisen.

Der erste Verfahrensschritt, die Umsetzung von Verbindung (1), wie 1,2,4 Trivinylcyclohexan, mit Organosiloxan (2), wie 1,3-Dihydrogen-1,1,3,3-tetramethyldisiloxan, im Überschuss in Gegenwart von Katalysator (3) kann durch folgendes Reaktionsschema (1) dargestellt werden:

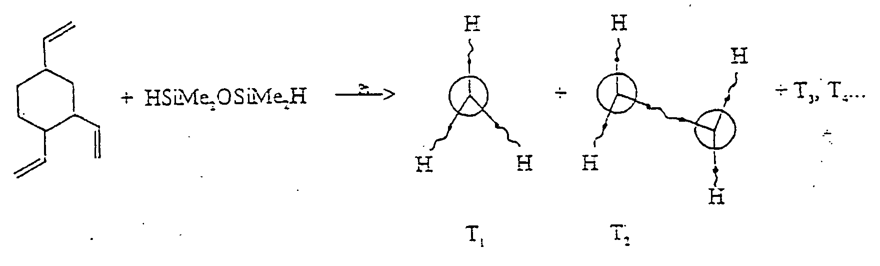

Die erhaltene Siloxancopolymermischung enthält dabei einen Anteil von vorzugsweise über 50% von individuellen Verbindungen T₃ und T₄ und höher verzweigten Polymeren.

Je nach dem stöchiometrischen Verhältnis H-Si/C=C enthält die Siloxancopolymermischung wechselnde Mengen an Organosiloxan (2), welches bei niedrigen Molekulargewichten im Vakuum entfernt werden kann, ansonsten als Komponente mit aktivem Wasserstoff in der Produktmischung verbleibt.

Als die Anlagerung von Si-gebundenem Wasserstoff an aliphatische Doppelbindung fördernde Katalysatoren können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie
Platinhalogenide, z.B. PtCl₄, H₂PtCl₆*6H₂O, Na₂PtCl₄*4H₂O, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus H₂PtCl₆*6H₂O und Cyclohexanon, Platin-Vinylsiloxankomplexe, wie Platin-1,3-Divinyl-1,1,3,3-tetra-methyl-disiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-di-chlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin, wie das Umsetzungsprodukt aus in 1-Octen gelöstem Platintetrachlorid mit sec.-Butylamin oder Ammonium-Platinkomplexe.

Der Katalysator (3) wird im ersten Verfahrensschritt vorzugsweise in Mengen von 0,5 bis 100 Gew.-ppm (Gewichtsteilen je Million Gewichtsteilen), bevorzugt in Mengen von 2 bis 10 Gew.-ppm, jeweils berechnet als elementares Platin und bezogen auf das Gesamtgewicht von Verbindung (1) und Organosiloxan (2) verwendet.

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 20°C bis 150°C, bevorzugt 20°C bis 120°C, besonders bevorzugt 20°C bis 100°C durchgeführt.

Da die mindestens drei aliphatische Doppelbindungen aufweisende Verbindung (1), z. B. 1,2,4-Trivinylcyclohexan, bei höheren Temperaturen zur Polymerisation neigt, können bei dem erfindungsgemäßen Vefahren vorzugsweise Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an Verbindung (1) und Organosiloxan (2), eingesetzt.

Bei dem erfindungsgemäßen Verfahren können vorzugsweise inerte, organische Lösungsmittel mitverwendet werden. Die gegebenenfalls mitverwendeten inerten organischen Lösungsmittel können nach der Umsetzung destillativ entfernt werden oder im Reaktionsgemisch verbleiben.

Alternativ zu organischen Lösungsmitteln können inerte Siliconöle bei dem erfindungsgemäßen Verfahren mitverwendet werden oder das organische Lösungsmittel nach der Herstellung der verzweigten erfindungsgemäßen Siloxancopolymere gegen diese ausgetauscht werden.
Zur besseren Handhabung können organische Lösungsmittel nach der Herstellung der verzweigten erfindungsgemäßen Siloxancopolymere auch gegen reaktive Siliconöle ausgetauscht werden, indem man diese der Reaktionsmischung zusetzt und danach das Lösungsmittel destillativ entfernt. Bevorzugt sind Siliconöle mit einer Viskosität von bis zu 100 mm²/s bei 25°C und Si-gebundenem Wasserstoff als Reaktivbestandteil.

Die erhaltenen Si-gebundene Wasserstoffatome aufweisenden Siloxancopolymere können in einem weiteren Verfahrenschritt mit Organopolysiloxanen (4) equilibriert werden.

Als Organopolysiloxane (4) werden vorzugsweise solche ausgewählt aus der Gruppe bestehend aus vorzugsweise linearen, endständige Triorganosiloxygruppen aufweisenden Organopolysiloxanen der Formel

R₃SiO(SiR₂O) ᵣSiR₃ ,

wobei R die oben dafür angegebene Bedeutung hat und
r 0 oder eine ganze Zahl im Wert von vorzugsweise 1 bis 1500, bevorzugt 10 bis 300, ist,
linearen, endständige Hydroxylgruppen aufweisenden Organopolysiloxanen der Formel

HO(SiR₂O)ₛH ,

wobei R die oben dafür angegebene Bedeutung hat und
s eine ganze Zahl im Wert von vorzugsweise 1 bis 1500, bevorzugt 10 bis 300, ist,
verzweigten, gegebenenfalls Hydroxylgruppen aufweisenden Organopolysiloxanen aus Einheiten der Formel

R₃SiO_{1/2}, R₂SiO und RSiO_{3/2},

wobei R die oben dafür angegebene Bedeutung hat, cyclischen Organopolysiloxanen der Formel

(R₂SiO)ₜ ,

wobei R die oben dafür angegebene Bedeutung hat und
t eine ganze Zahl von 3 bis 12 ist,
und Mischpolymerisaten aus Einheiten der Formel

R₂SiO und RSiO_{3/2} ,

wobei R die oben dafür angegebene Bedeutung hat,
eingesetzt.

Bevorzugte Organopolysiloxane (4) sind vorzugsweise die der Formeln R₃SiO(SiR₂O)ᵣSiR₃, HO(SiR₂O)ₛH und (R2SiO)ₜ, wobei diejenigen der Formel R₃SiO(SiR₂O)ᵣSiR₃ besonders bevorzugt sind.

Das Mengenverhältnis der bei der gegebenenfalls durchgeführten Equilibrierung eingesetzten Organopolysiloxane (4) und Si-gebundene Wasserstoffatome aufweisenden Siloxancopolymere wird lediglich durch den gewünschten Anteil der Si-gebundenen Wasserstoffatome in den bei der gegebenenfalls durchgeführten Equilibrierung erzeugten Siloxancopolymeren und durch die gewünschte mittlere Kettenlänge bestimmt.

Bei dem gegebenenfalls durchgeführten Equilibrieren werden vorzugsweise basische oder saure Katalysatoren, welche die Equilibrierung fördern, eingesetzt. Beispiele für solche Katalysatoren sind vorzugsweise Alkalihydroxide, wie Natriumhydroxid, Kaliumhydroxid, und Cäsiumhydroxid, Trimethylbenzylammoniumhydroxid und Tetramethylammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2 000 Gew.- ppm, jeweils bezogen auf das Gesamtgewicht der eingesetzten Si-gebundenen Wasserstoffatome aufweisenden Siloxancopolymere und eingesetzten Organopolysiloxane (4), verwendet.

Beispiele für saure Katalysatoren sind vorzugsweise Schwefelsäure, Phosphorsäure, Trifluormethansäure, Phosphornitridchloride und unter den Reaktionsbedingungen feste, saure Katalysatoren, wie säureaktivierte Bleicherde, saure Zeolithe, sulfonierte Kohle und sulfoniertes Styrol-Divinylbenzol-Mischpolymerisat. Bevorzugt sind Phosphornitridchloride. Phosphornitridchloride werden vorzugsweise in Mengen von 5 bis 1000 Gew.-ppm (=Teile je Million), insbesondere 50 bis 200 Gew.-ppm, jeweils bezogen auf das Gesamtgewicht der eingesetzten Organosiliciumverbindungen, verwendet.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht der jeweils eingesetzten Si-gebundenen Wasserstoffatome aufweisenden Siloxancopolymere und eingesetzten Organopolysiloxane (4), in mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Als Antimisting Additive werden bevorzugt solche Alkenylgruppen aufweisende Siloxancopolymere eingesetzt, die ohne einen weiteren Equilibrierungsschritt hergestellt werden und besonders hohe Verzweigung aufweisen. Bevorzugte Additive werden erhalten, wenn in den angegebenen besonders bevorzugten stöchiometrischen Bereichen gearbeitet wird.

Die erfindungsgemäßen Antimisting Additive werden zur Reduktion der Aerolsolbildung den vernetzbaren Siliconbeschichtungszusammensetzungen zugegeben.

Die erfindungsgemäßen Antimisting Additive, die Alkenylgruppen aufweisenden Siloxancopolymere, werden in den vernetzbaren Siliconbeschichtungszusammensetzungen vorzugsweise in Mengen von 0,5 bis 10 Gew.-%, bevorzugt 1 bis 5 Gew.-%, bezogen auf das Gesamtgewicht der vernetzbaren Siliconbeschichtungszusammensetzungen, eingesetzt.

Als vernetzbare Siliconbeschichtungszusammensetzungen werden vorzugsweise solche enthaltend
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen
(C) Die Anlagerung von Si-gebundenem Wasserstoff an aliphatische Mehrfachbindung fördernde Katalysatoren
   und gegebenenfalls
(D) Inhibitoren
eingesetzt.

Bei den vernetzbaren Siliconbeschichtungszusammensetzungen kann vorzugsweise eine Art des erfindungsgemäßen Antimisting Additivs (X) oder verschiedene Arten des erfindungsgemäßen Antimisting Additivs (X) eingesetzt werden.

Als Organopolysiloxane (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel 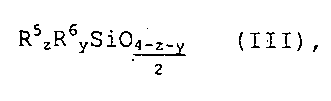 wobei R⁵ einen einwertigen, gegebenenfalls substituierten, von aliphatischen Kohlenstoff-Kohlenstoff-Mehrfachbindungen freien Kohlenwasserstoffrest mit 1 bis 18 Kohlenstoffatomen je Rest und
R⁶ einen einwertigen Kohlenwasserstoffrest mit terminaler, aliphatischer Kohlenstoff-Kohlenstoff-Mehrfachbindung mit 2
bis 8 Kohlenstoffatomen je Rest bedeutet,
z 0, 1, 2 oder 3,
y 0, 1 oder 2
und die Summe z+y 0, 1, 2 oder 3 ist,
mit der Maßgabe, dass durchschnittlich mindestens 1,5 Reste R⁶, bevorzugt durchschnittlich mindestens 2 Reste R⁶, vorliegen, verwendet.

Bevorzugt als Organosiliciumverbindungen (A) sind Organopolysiloxane der allgemeinen Formel

R⁶_{g}R⁵_{3-g}SiO (SiR⁵₂O) ᵥ(SiR⁵R⁶O) _{w}SiR⁵_{3-g}R⁶_{g} (IV)

wobei R⁵ und R⁶ die oben dafür angegebene Bedeutung haben,
g 0, 1 oder 2,
v 0 oder eine ganze Zahl von 1 bis 1500 und
w 0 oder eine ganze Zahl von 1 bis 200 ist,
mit der Maßgabe, dass durchschnittlich mindestens 1,5 Reste R⁶, bevorzugt durchschnittlich mindestens 2 Reste R⁶, enthalten sind.

Im Rahmen dieser Erfindung soll Formel (IV) so verstanden werden, dass v Einheiten - (SiR⁵₂O) - und w Einheiten -(SiR⁵R⁶O)-in beliebiger Weise im Organopolysiloxanmolekül verteilt sein können.

Als Organosiliciumverbindungen (A) können auch verzweigte Polymere mit endständigen ω-Alkenylgruppen, bevorzugt Si-gebundene Vinylgruppen, wie sie in US 6,034,225, insbesondere Spalte 1, Zeile 43 bis Spalte 2, Zeile 13, und US 6,258,913, insbesondere Spalte 1, Zeile 62 bis Spalte 2, Zeile 35, beschrieben sind, verwendet werden. Als Organosiliciumverbindungen (A) können auch lineare Organopolysiloxane, wie sie in US 6,274,692, insbesondere Spalte 2, Zeile 3 bis 27, beschrieben sind und die nicht an beiden Enden je einen aliphatisch ungesättigten Kohlenwasserstoffrest, wie eine Si-gebundene Vinylgruppe, aufweisen sondern an den Enden auch aliphatisch gesättigte Kohlenwasserstoffreste, wie Si-gebundene Methylgruppen aufweisen, verwendet werden. Als Organosiliciumverbindungen (A) können auch solche, wie sie in US-A 5,241,034, insbesondere Spalte 16, Zeile 23 bis Spalte 17, Zeile 35, DE-A 195 22 144, insbesondere Seite 2, Zeile 44 bis 67, DE-A 196 29 053, insbesondere Seite 2, Zeile 51 bis Seite 3, Zeile 29, US-A 5,760,145, insbesondere Spalte 2, Zeile 46 bis Spalte 4, Zeile 23 und US-A 6,265,497, insbesondere Spalte 2, Zeile 3 bis 47,beschrieben sind, verwendet werden.

Die Organopolysiloxane (A) besitzen vorzugsweise eine durchschnittliche Viskosität von 100 bis 10 000 mPa.s bei 25°C.

Beispiele für Kohlenwasserstoffreste R⁵ sind Alkylreste, wie der Methyl-, Ethyl-, n-Propyl-, iso-Propyl-, 1-n-Butyl-, 2-n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der a- und der β-Phenylethylrest.

Beispiele für Reste R⁶ sind Alkenylreste, wie der Vinyl-, 5-Hexenyl-, Allyl-, 3-Butenyl- und 4-Pentenylrest; und Alkinylreste, wie der Ethinyl-, Propargyl- und 1-Propinrest.

Als Organosiliciumverbindungen (B), die Si-gebundene Wasserstoffatome aufweisen, werden vorzugsweise lineare, cyclische oder verzweigte Organopolysiloxane aus Einheiten der allgemeinen Formel 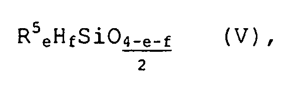 wobei
R⁵ die oben dafür angegebene Bedeutung hat,
e 0, 1, 2 oder 3,
f 0, 1 oder 2
und die Summe von e+f 0, 1, 2 oder 3 ist,
mit der Maßgabe, dass durchschnittlich mindestens 2 Si-gebundene Wasserstoffatome vorliegen, verwendet.

Vorzugsweise enthalten die Organosiliciumverbindungen (B) mindestens 3 Si-gebundene Wasserstoffatome.
Im Rahmen dieser Erfindung soll Formel VI so verstanden werden, dass o Einheiten - (SiR⁵₂O) - und p Einheiten - (SiR⁵HO) - in beliebiger Weise im Organopolysiloxanmolekül verteilt sein können.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Als Organosiliciumverbindungen (B) können auch solche, wie sie in US-A 5,691,435, insbesondere Spalte 3, Zeile 45 bis Spalte 4, Zeile 29, beschrieben sind, verwendet werden.

Die Organopolysiloxane (B) besitzen vorzugsweise eine durchschnittliche Viskosität von 10 bis 1 000 mPa.s bei 25°C.

Organosiliciumverbindung (B) wird vorzugsweise in Mengen von 0,5 bis 3,5, bevorzugt 1,0 bis 3,0 Grammatom Si-gebundenen Wasserstoff je Mol Si-gebundenen Restes mit aliphatischer Kohlenstoff-Kohlenstoff-Mehrfachbindung in der Organosiliciumverbindung (A) eingesetzt.

Als die Anlagerung von Si-gebundenem Wasserstoff an aliphatische Mehrfachbindungen fördernde Katalysatoren können auch bei den vernetzbaren Siliconbeschichtungszusammensetzungen die gleichen Katalysatoren eingesetzt werden, die auch bisher zur Förderung der Anlagerung von Si-gebundenem Wasserstoff an aliphatische Mehrfachbindung eingesetzt werden konnten. Als Bestandteil (C) werden vorzugsweise die oben genannten Katalysatoren (3) verwendet.

Die Katalysatoren (C) werden vorzugsweise in Mengen von 10 bis 1000 Gew.-ppm (Gewichtsteilen je Million Gewichtsteilen), bevorzugt 50 bis 200 Gew.-ppm, jeweils berechnet als elementares Platinmetall und bezogen auf das Gesamtgewicht der Organosiliciumverbindungen (A) und (B), eingesetzt.

Die vernetzbaren Siliconbeschichtungszusammensetzungen können die Anlagerung von Si-gebundenem Wasserstoff an aliphatische Mehrfachbindung bei Raumtemperatur verzögernde Mittel, sogenannte Inhibitoren (D), enthalten.

Als Inhibitoren (D) können auch bei den vernetzbaren Siliconbeschichtungszusammensetzungen alle Inhibitoren verwendet werden, die auch bisher für den gleichen Zweck verwendet werden konnten.

Beispiele für Inhibitoren (D) sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol, eine Mischung aus Diallylmaleinat und Vinylacetat, Maleinsäuremonoester, und Inhibitoren wie die Verbindung der Formel
HC≡C-C(CH₃)(OH)-CH₂CH₂-CH=C(CH₃)₂, käuflich erwerblich unter dem Handelsnamen "Dehydrolinalool" bei der Fa. BASF.

Wird Inhibitor (D) mitverwendet, so wird er zweckmäßig in Mengen von vorzugsweise 0,01 bis 10 Gew.-%, bevorzugt 0,01 bis 3 Gew.-%, bezogen auf das Gesamtgewicht der Organosiliciumverbindungen (A) und (B), eingesetzt.

Beispiele für weitere Bestandteile, die bei den vernetzbaren Siliconbeschichtungszusammensetzungen mitverwendet werden können, sind Mittel zur Einstellung der Trennkraft, organische Lösungsmittel, Haftvermittler und Pigmente.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

R⁷R⁵₂SiO_{1/2} und SiO₂ ,

sogenannte MQ-Harze, wobei R⁷ ein Wasserstoffatom, ein Kohlenwasserstoffrest R⁵, wie Methylrest, ein Alkenylrest R⁶, wie Vinylrest, ist, und R⁵ und R⁶ die oben dafür angegebene Bedeutung haben und die Einheiten der Formel R⁷R⁵₂SiO_{1/2} gleich oder verschieden sein können. Das Verhältnis von Einheiten der Formel R⁷R⁵₂SiO_{1/2} zu Einheiten der Formel SiO₂ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Beispiele für organische Lösungsmittel sind Benzine, z. B. Alkangemische mit einem Siedebereich von 70°C bis 180°C, n-Heptan, Benzol, Toluol und Xylole, halogenierte Alkane mit 1 bis 6 Kohlenstoffatom(en), wie Methylenchlorid, Trichlorethylen und Perchlorethylen, Ether, wie Di-n-butyl-ether, Ester, wie Ethylacetat, und Ketone, wie Methylethylketon und Cyclohexanon.

Werden organische Lösungsmittel mitverwendet, so werden sie zweckmäßig in Mengen von vorzugsweise 10 bis 90 Gew.-%, bevorzugt 10 bis 70 Gew.-%, bezogen auf das Gesamtgewicht der Organosiliciumverbindungen (A) und (B), eingesetzt.

Die Reihenfolge beim Vermischen der Bestandteile (X), (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 70°C bis 180°C. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Gegenstand der Erfindung sind weiterhin Formkörper hergestellt durch Vernetzung der vernetzbaren Siliconbeschichtungszusammensetzungen mit reduzierter Aerosolbildung enthaltend
(X) Antimisting Additive nach einem der Ansprüche 1 bis 6 in Mengen von 0,5 bis 10 Gew.-%, bezogen auf das Gesamtgewicht der vernetzbaren Siliconbeschichtungszusammensetzung,
(A) Organosiliciumverbindungen, die Reste mit aliphatischen Kohlenstoff-Kohlenstoff-Mehrfachbindungen aufweisen,
(B) Organopolysiloxane mit Si-gebundenen Wasserstoffatomen der allgemeinen Formel

   HₕR⁵₃₋ₕSiO (SiR⁵₂O).(SiR⁵HO)ₚSiR⁵₃₋ₕHₕ (VI)

   wobei R⁵ einen einwertigen, ggf. substituierten, von aliphatischen Kohlenstoff-Kohlenstoff-Mehrfachbindungen freien Kohlenwasserstoffrest mit 1 bis 8 Kohlenstoffatomen je Rest bedeutet,
   h 0, 1 oder 2,
   o 0 oder eine ganze Zahl von 1 bis 1500 und
   p 0 oder eine ganze Zahl von 1 bis 200 ist,
   mit der Maßgabe, dass durchschnittlich mindestens 2 Si-gebundene Wasserstoffatome vorliegen,
(C) die Anlagerung von Si-gebundenem Wasserstoff an aliphatische Mehrfachbindung fördernde Katalysatoren und gegebenenfalls
(D) Inhibitoren.

Bei den Formkörper handelt es sich vorzugsweise um Beschichtungen, bevorzugt um klebrige Stoffe abweisende Überzüge.

Gegenstand der Erfindung ist weiterhin ein Verfahren zur Herstellung von Beschichtungen durch Auftragen von erfindungsgemäßen vernetzbaren Zusammensetzungen auf die zu beschichtenden Oberflächen und anschließende Vernetzung der Zusammensetzungen.

Die erfindungsgemäßen vernetzbaren Zusammensetzungen werden bevorzugt zur Herstellung von klebrige Stoffe abweisenden Überzügen, z.B. zur Herstellung von Trennpapieren, verwendet. Klebrige Stoffe abweisende Überzüge werden hergestellt durch Auftragen von erfindungsgemäßen vernetzbaren Zusammensetzungen auf die klebrige Stoffe abweisend zu machenden Oberflächen und anschließende Vernetzung der Zusammensetzungen.

Das Auftragen von den erfindungsgemäßen Zusammensetzungen auf die zu beschichtenden Oberflächen, bevorzugt klebrige Stoffe abweisend zu machenden Oberflächen, kann in beliebiger, für die Herstellung von Beschichtungen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Die Schichtdicke auf den zu beschichtenden Oberflächen beträgt vorzugsweise 0,3 bis 6 µm, besonders bevorzugt 0,5 bis 2,0 µm.

Bei den zu beschichtenden Oberflächen, bevorzugt klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststofffolien, z. B. Polyethylenfolien oder Polypropylenfolien, gewebtem und ungewebtem Tuch aus natürlichen oder synthetischen Fasern, keramischen Gegenständen, Glas, einschließlich Glasfasern, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m², ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunststoff, Holz oder Eisen, das für Lagerung und/oder Transport von klebrigen Gütern, wie Klebstoffen, klebrigen Lebensmitteln, z. B. Kuchen, Honig, Bonbons und Fleisch; Bitumen, Asphalt, gefetteten Materialien und Rohgummi, bestimmt ist. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die die erfindungsgemäßen Antimisting Additiven enthaltenden vernetzbaren Siliconbeschichtungszusammensetzungen eignen sich insbesondere zur Verwendung in schnellen Beschichtungssystemen mit Beschichtungsgeschwindigkeiten vorzugsweise von 300 bis 2000 m/min, bevorzugt 400 bis 1500 m/min, bei denen die erfindungsgemäßen Zusammensetzungen bei hohen Geschwindigkeiten auf die zu beschichtenden Oberflächen aufgebracht werden.

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstofffilm, der beispielsweise auf einem Etikettenfacepapier aufliegt, auf das beschichtete Papier aufgetragen und der Verbund wird dann zusammengepresst. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepresst.
Beim off-line Verfahren richtet sich die Aufwickelgeschwindigkeit nach der Zeit, die notwendig ist, um den Siliconüberzug klebfrei zu machen. Beim in-line Verfahren richtet sich die Verfahrensgeschwindigkeit nach der Zeit, die notwendig ist, um den Siliconüberzug migrationsfrei zu machen. Das off-line Verfahren und das in-line Verfahren kann mit den erfindungsgemäßen Zusammensetzungen bei einer Geschwindigkeit von 300 bis 2000 m/min, bevorzugt 400 bis 1500 m/min, betrieben werden.

### Herstellung der Alkenylgruppen aufweisenden Siloxancopolymere:

### Beispiel 1:

Bei 25°C werden die folgenden Komponenten homogen vermischt: 1259,3 g eines α,ω-Dihydrogensiloxans mit einem Gehalt von Si-gebundenem Wasserstoff (Aktivwasserstoff) von 0,054 Gew.-%, 1280,9 g trimethylsilylterminiertes Polydimethylsiloxan der Viskosität 9,8 mm²/s bei 25°C und 21,6 g Trivinylcyclohexan (SiH/C=C = 1, 7) .
Man fügt dann 0,25 g einer 1 Gew.-%ige (bezogen auf elementares Platin) Lösung eines Platin-1,3-Divinyl-1,1,3,3-tetramethyl-disiloxan-Komplexes in einem α,ω-Divinyldimethylpolysiloxan mit einer Viskosität von 1000 mPa.s bei 25°C (eine Lösung des sogenannten Karstedt-Katalysators, dessen Herstellung in US 3,775,452 beschrieben ist) zu. Während 1 h steigt die Gemischtemperatur um ca. 8 °K an. Danach lässt man noch 1 h bei 100°C nachrühren. Man erhält eine klare Lösung eines verzweigten Siloxanpolymeren mit SiH-Funktionen in der gleichen Menge trimethylsilylterminiertem Polydimethylsiloxan mit einer Viskosität von 230 mm²/s bei 25°C. Die Lösung ist mit vinylfunktionellen Polysiloxanen unbegrenzt mischbar.

### Beispiel 2:

Bei 25°C werden die folgenden Komponenten homogen vermischt: 799,2 g eines α,ω-Dihydrogensiloxans mit einem Gehalt von Aktivwasserstoff von 0,0106 %, 801,9 g trimethylsilylterminiertes Polydimethylsiloxan der Viskosität 9,8 mm²/s bei 25°C und 2,7 g Trivinylcyclohexan (SiH/C=C = 1,7). Man fügt dann 0,3 g der in Beispiel 1 beschriebenen Karstedt-Katalysatorlösung zu, deren Platin-Gehalt 1,0% ist. Das Gemisch wird 1 h gerührt, dabei steigt die Gemischtemperatur kaum an. Danach lässt man noch 1 h bei 40° C nachrühren. Man erhält eine klare Lösung eines verzweigten Siloxanpolymeren mit SiH-Funktionen in der gleichen Menge trimethylsilylterminiertem Polydimethylsiloxan mit einer Viskosität von ca. 10 000 mm²/s bei 25°C.

### Beispiel 3:

Bei 25°C werden die folgenden Komponenten homogen vermischt: 799,2 g eines α,ω-Dihydrogensiloxans mit einem Gehalt von Aktivwasserstoff von 0,0106 %, 802 g Toluol und 2,7 g Trivinylcyclohexan (SiH/C=C = 1,7).
Man fügt dann 0,3 g der in Beispiel 1 beschriebenen Karstedt-Katalysatorlösung zu, deren Platin-Gehalt 1,0% ist. Das Gemisch wird 1 h gerührt, dabei steigt die Gemischtemperatur kaum an. Danach lässt man noch 1 h bei 40° C nachrühren. Dann entfernt man das Toluol unter vermindertem Druck und ersetzt es durch die gleiche Menge 1-Dodecen. Man erhält eine klare Lösung eines verzweigten Siloxanpolymeren mit SiH-Funktionen in 1-Dodecen mit einer Viskosität von 2700 mm²/s bei 25°C. Die Lösung ist mit vinylfunktionellen Polysiloxanen unbegrenzt mischbar.

### 2. Verwendung der Alkenylgruppen aufweisenden Siloxancopolymere als Antimisting Additive:

### Beispiel 4:

Bei hohem Auftragsgewicht und bestimmten Beschichtungsformulierungen kann die Aerosolbildung bereits bei Maschinengeschwindigkeiten deutlich unter 500 m/min auftreten. Die Anwendung der erfindungsgemäßen verzweigten Siloxancopolymere zur Reduktion der Aerosolbildung erfolgte als Additiv in vernetzbaren Siliconbeschichtungssystemen für den Einsatz in solchen Beschichtungsprozessen.

Als Standardformulierung wurde eine Mischung aus

100 Gew.-teilen eines verzweigten Polysiloxans mit Vinyldimethylsiloxyendgruppen, das eine Viskosität von 420 mPa.s (25°C) und eine Jodzahl von 8,0 aufweist und gemäß Beispiel 3 von US 6,034,225 hergestellt wird, 3,6 Gew.-teile eines linearen Polysiloxans aus Hydrogenmethylsiloxan- und Trimethylsiloxaneinheiten im Molverhältnis 24 : 1,
1,04 Gew.-teile einer 1 Gew.-%igen (bezogen auf elementares Platin) Lösung eines Platin-1,3-Divinyl-1,1,3,3-tetramethyl-disiloxan-Komplexes in einem α,ω-Divinyldimethylpolysiloxan mit einer Viskosität von 1000 mPa·s bei 25°C und
0,3 Gew.-teile 1-Ethinylcyclohexanol
eingesetzt.

Die erfindungsgemäßen Additive gemäß den in Tabelle 1 angegebenen Herstellungsbeispielen wurden der Standardformulierung gemäß den in Tabelle 1 angegebenen Mengen zugesetzt. Als Vergleich wurde eine Standardformulierung ohne erfindungsgemäßes Additiv eingesetzt. Diese Mischungen wurden zur Papierbeschichtung eingesetzt.

Als Substrat wurde Papier der Fa. Ahlstrom mit der Bezeichnung Glassine Larice Tipo 325 mit 62 g/m² verwendet. Die Beschichtung erfolgte auf der Pilotbeschichtungsanlage der Fa. Dixon der Modellnummer 1060 mit einem 5-Walzen Auftragswerk, bei 150 m/min. Dabei wurde die Auftragsrolle mit 95% der Papiergeschwindigkeit gefahren. Die Beschichtung wurde im Trockenofen mit 3 m Länge bei 140°C ausgehärtet.

Die Aerosolbildung wurde mit dem Dusttrak Aerosol Monitor Model 8520 bestimmt. Die Probennahme erfolgte zwischen Siliconauftragswalze und Walzenspalt in einem Abstand von 12 cm zur Siliconauftragswalze. Zusätzlich wurde die Aerosolbildung visuell beurteilt und mit den Ziffern 1 - 3 bewertet:
- 1: keine sichtbare Aerosolbildung
- 2: schwach sichtbare Aerosolbildung
- 3: starke Aerosolbildung.

Während der Beschichtungsversuche wurden die maximal angezeigten Aerosolwerte protokolliert. Das Beschichtungsgewicht wurde mittels Röntgenfluoreszenzanalyse in Referenz zu einem geeigneten Standard bestimmt und betrug 4 g/m².

Weiterhin wurde Einfluss der erfindungsgemäßen Antimisting Additive auf die Aushärtung des Beschichtungssystems mittels Migrationstest bestimmt. Die Migration wird entsprechend ihres Ausmaßes mit den Noten 1 bis 6 beurteilt, wobei die Note 1 keine Migration (vollständige Aushärtung), die Note 3 eine leichte und die Note 6 eine starke Migration (unvollständige Aushärtung) bedeutet. Der Migrationstest ist in der Broschüre DEHESIVE® Silicones Testmethoden der Fa. Wacker-Chemie GmbH beschrieben.

Die Ergebnisse sind in Tabelle 1 zusammengefasst.

**Tabelle 1:**

| Additiv | Menge Additiv in % | Misting, mg/m³ (Dusttrak) | Misting (visuell) | Migration |
|---|---|---|---|---|
| Beispiel 1 | 4 | 11 | 2,5 | 2,5 |
| Beispiel 2 | 4 | 1,15 | 1 | 1,5 |
| Beispiel 3 | 4 | 2,1 | 1 | 1 |
| Beispiel 3 | 1 | 3,5 | 1 | 1,5 |
| - | - | 17 | 3 | 2 |

Die Vergleichsversuche zeigen, dass der Zusatz der erfindungsgemäßen, verzweigten Si-gebundene Wasserstoffatome aufweisenden Siloxancopolymere als Antimisting Additive die Aerosolbildung vernetzbarer Siliconbeschichtungssysteme in schnellen Beschichtungsprozessen deutlich reduziert.

## Patentansprüche

1. Verwendung von Antimisting Additiven in vernetzbaren Siliconbeschichtungszusammensetzungen zur Reduktion der Aerosolbildung, **dadurch gekennzeichnet, dass** als Antimisting Additive Si-gebundene Wasserstoffatome aufweisende Siloxancopolymere herstellbar, indem eine mindestens drei aliphatische Doppelbindungen aufweisende Verbindung (1) der allgemeinen Formel
R²(CR³=CH₂)ₓ (I)
wobei R² einen dreiwertigen oder vierwertigen Kohlenwasserstoffrest mit vorzugsweise 1 bis 25 Kohlenstoffatomen je Rest, der ein oder mehrere von einander separate Heteroatome ausgewählt aus der Gruppe von Sauerstoff, Silizium und Titan enthalten kann,
R³ ein Wasserstoffatom oder einen Alkylrest mit 1 bis 6 Kohlenstoffatomen je Rest und
x 3 oder 4, bedeutet,
mit einem Organosiloxan (2) mit endständigen Si-gebundenen Wasserstoffatomen
in Gegenwart von die Anlagerung von Si-gebundenem Wasserstoff an aliphatische Doppelbindung förderndem Katalysator (3) umgesetzt wird,
wobei das eingesetzte Verhältnis von Si-gebundenem Wasserstoff im Organosiloxan (2) zu aliphatischer Doppelbindung in organischer Verbindung (1) 1,3 bis 10 beträgt,
und gegebenenfalls in einem zweiten Schritt die so erhaltenen Si-gebundene Wasserstoffatome aufweisenden Siloxancopolymere mit Organopolysiloxan (4), ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, verzweigten, gegebenenfalls Hydroxylgruppen aufweisenden Organopolysiloxanen, cyclischen Organopolysiloxanen und Mischpolymerisaten aus Diorganosiloxan- und Monoorganosiloxaneinheiten, equilibriert werden, eingesetzt werden.

2. Verwendung nach Anspruch 1, **dadurch gekennzeichnet dass** als Organosiloxan (2) solches der allgemeinen Formel
HR₂SiO(SiR₂O)ₙSiR₂H (II),
wobei R gleiche oder verschiedene, gegebenenfalls halogenierte Kohlenwasserstoffreste mit 1 bis 6 Kohlenstoffatomen je Rest und
n 0 oder eine ganze Zahl bedeutet, eingesetzt wird.

3. Verwendung nach Anspruch 2, **dadurch gekennzeichnet, dass** n eine ganze Zahl von 50 bis 2000 bedeutet.

4. Verwendung nach Anspruch 1, 2 oder 3, **dadurch gekennzeichnet, dass** als organische Verbindung (1) solche eingesetzt wird, bei der R² einen dreiwertigen Kohlenwasserstoffrest mit 1 bis 25 Kohlenstoffatomen je Rest und x den Wert 3 bedeutet.

5. Verwendung nach einem der Ansprüche 1 bis 4, **dadurch gekennzeichnet, dass** als organische Verbindung (1) 1,2,4-Trivinylcyclohexan eingesetzt wird.

6. Verwendung nach einem der Ansprüche 1 bis 5, **dadurch gekennzeichnet, dass** das eingesetzte Verhältnis von Si-gebundenem Wasserstoff im Organosiloxan (2) zu aliphatischer Doppelbindung in organischer Verbindung (1) 1,6 bis 3,0 beträgt.

7. Verwendung nach einem der Ansprüche 1 bis 6, **dadurch gekennzeichnet, dass** als vernetzbare Siliconbeschichtungszusammensetzung solche enthaltend
(A) Organosiliciumverbindungen, die Reste mit aliphatischen Kohlenstoff-Kohlenstoff-Mehrfachbindungen aufweisen,
(B) Organosiliciumverbindungen mit Si-gebundenen Wasserstoffatomen,
(C) die Anlagerung von Si-gebundenem Wasserstoff an aliphatische Mehrfachbindung fördernde Katalysatoren und gegebenenfalls
(D) Inhibitoren
eingesetzt werden.

8. Formkörper hergestellt durch Vernetzung der vernetzbaren Siliconbeschichtungszusammensetzungen mit reduzierter Aerosolbildung enthaltend
(X) Antimisting Additive nach einem der Ansprüche 1 bis 6 in Mengen von 0,5 bis 10 Gew.-%,bezogen auf das Gesamtgewicht der vernetzbaren Siliconbeschichtungszusammensetzung,
(A) Organosiliciumverbindungen, die Reste mit aliphatischen Kohlenstoff-Kohlenstoff-Mehrfachbindungen aufweisen,
(B) Organopolysiloxane mit Si-gebundenen Wasserstoffatomen der allgemeinen Formel
HₕR⁵₃₋ₕSiO (SiR⁵₂O)ₒ(SiR⁵HO)ₚSiR⁵₃₋ₕHₕ (VI)
wobei R⁵ einen einwertigen, ggf. substituierten, von aliphatischen Kohlenstoff-Kohlenstoff-Mehrfachbindungen freien Kohlenwasserstoffrest mit 1 bis 8 Kohlenstoffatomen je Rest bedeutet,
h 0, 1 oder 2,
o 0 oder eine ganze Zahl von 1 bis 1500 und
p 0 oder eine ganze Zahl von 1 bis 200 ist,
mit der Maßgabe, dass durchschnittlich mindestens 2 Si-gebundene Wasserstoffatome vorliegen,
(C) die Anlagerung von Si-gebundenem Wasserstoff an aliphatische Mehrfachbindung fördernde Katalysatoren und gegebenenfalls
(D) Inhibitoren.

9. Formkörper gemäß Anspruch 8, **dadurch gekennzeichnet, dass** es sich um Beschichtungen handelt.

10. Formkörper gemäß Anspruch 8, **dadurch gekennzeichnet, dass** es sich um klebrige Stoffe abweisende Überzüge handelt.

11. Verfahren zur Herstellung von Beschichtungen durch Auftragen von vernetzbaren Zusammensetzungen gemäß Anspruch 8 auf die zu beschichtenden Oberflächen und anschließende Vernetzung der Zusammensetzungen.

12. Verfahren zur Herstellung von klebrige Stoffe abweisende Überzüge durch Auftragen von vernetzbaren Zusammensetzungen gemäß Anspruch 8 auf die klebrige Stoffe abweisend zu machenden Oberflächen und anschließende Vernetzung der Zusammensetzungen.

## Claims

1. Use of antimisting additives in crosslinkable silicone coating compositions for reducing the formation of aerosol, **characterized in that** it comprises using as antimisting additive siloxane copolymers containing Si-bonded hydrogen atoms preparable
by reacting a compound (1) containing at least three aliphatic double bonds, of the general formula
R²(CR³=CH₂)ₓ (I)
where R² is a trivalent or tetravalent hydrocarbon radical preferably having from 1 to 25 carbon atoms per radical, which can contain one or more mutually separate heteroatoms selected from the group consisting of oxygen, silicon and titanium,
R³ is a hydrogen atom or an alkyl radical having from 1 to 6 carbon atoms per radical, and
x is 3 or 4
with an organosiloxane (2) having terminal Si-bonded hydrogen atoms
in the presence of catalyst (3) which promotes the addition of Si-bonded hydrogen onto aliphatic double bond,
the ratio employed of Si-bonded hydrogen in the organosiloxane (2) to aliphatic double bond in organic compound (1) being from 1.3 to 10,
and optionally in a second step
equilibrating the resulting siloxane copolymers, containing Si-bonded hydrogen atoms, with organopolysiloxane (4), selected from the group consisting of linear organopolysiloxanes containing terminal triorganosiloxy groups, linear organopolysiloxanes containing terminal hydroxyl groups, branched organopolysiloxanes optionally containing hydroxyl groups, cyclic organopolysiloxanes and copolymers comprising diorganosiloxane and monoorganosiloxane units.

2. Use according to claim 1, **characterized in that** said organosiloxane (2) has the general formula
HR₂SiO(SiR₂O)ₙSiR₂H (II)
where R denotes identical or different, optionally halogenated hydrocarbon radicals having 1 to 6 carbon atoms per radical and
n is 0 or an integer.

3. Use according to claim 2, **characterized in that** n is an integer from 50 to 2000.

4. Use according to claim 1, 2 or 3, **characterized in that** said organic compound (1) is one wherein R² is a trivalent hydrocarbon radical having 1 to 25 carbon atoms per radical and x denotes a value of 3.

5. Use according to one of claims 1 to 4, **characterized in that** said organic compound (1) comprises 1,2,4-trivinylcyclohexane.

6. Use according to one of claims 1 to 5, **characterized in that** the ratio employed of Si-bonded hydrogen in the organopolysiloxane (2) to aliphatic double bond in organic compound (1) is from 1.6 to 3.0.

7. Use according to any of claims 1 to 6, **characterized in that** said crosslinkable silicone coating composition comprises
(A) organosilicon compounds having radicals containing aliphatic carbon-carbon multiple bonds,
(B) organosilicon compounds containing Si-bonded hydrogen atoms,
(C) catalysts which promote the addition of Si-bonded hydrogen onto aliphatic multiple bond,
and if desired
(D) inhibitors.

8. Shaped bodies produced by crosslinking the crosslinkable silicone coating compositions featuring reduced aerosol formation, comprising
(X) antimisting additives according to one of claims 1 to 6 in amounts of from 0.5 to 10% by weight, based on the overall weight of the crosslinkable silicone coating compositions,
(A) organosilicon compounds having radicals containing aliphatic carbon-carbon multiple bonds,
(B) organosilicon compounds containing Si-bonded hydrogen atoms of the general formula
HₕR⁵₃₋ₕSiO(SiR⁵₂O)ₒ(SiR⁵HO)ₚSiR⁵₃₋ₕHₕ (VI)
where R⁵ is a monovalent, unsubstituted or substituted, hydrocarbon radical having from 1 to 8 carbon atoms per radical and being free from aliphatic carbon-carbon multiple bonds,
h is 0, 1 or 2,
o is 0 or an integer from 1 to 1500, and
p is 0 or an integer from 1 to 200,
with the proviso that there are on average at least 2 Si-bonded hydrogen atoms,
(C) catalysts which promote the addition of Si-bonded hydrogen onto aliphatic multiple bond,
and if desired
(D) inhibitors.

9. Shaped bodies according to claim 8, **characterized in that** they are coatings.

10. Shaped bodies according to claim 8, **characterized in that** they are coatings which repel tacky substances.

11. Process for producing coatings by applying crosslinkable compositions according to claim 8 to the surfaces that are to be coated and then crosslinking the compositions.

12. Process for producing coatings which repel tacky substances by applying crosslinkable compositions according to claim 8 to the surfaces that are to be made repellent to tacky substances and then crosslinking the compositions.

## Revendications

1. Utilisation d'additifs anti-buée dans des compositions de revêtement aux silicones réticulables, en vue de la réduction de la formation d'aérosols, **caractérisée en ce que** l'on utilise, en tant qu'additifs anti-buée, des copolymères de siloxane présentant des atomes d'hydrogène liés à Si, que l'on peut préparer en faisant réagir un composé (1), présentant au moins trois liaisons doubles aliphatiques, de la formule générale (I)
R²(CR³=CH₂)ₓ (I)
R² signifiant un radical hydrocarboné trivalent ou tétravalent; ayant, de préférence, de 1 à 25 atomes de carbone par radical, qui peut contenir un ou plusieurs hétéro atomes séparés les uns des autres; sélectionnés parmi le groupe de l'oxygène, du silicium et du titane,
R³ signifiant un atome d'hydrogène ou un radical alkyle ayant de 1 à 6 atomes de carbone par radical et
x signifiant 3 ou 4,
avec un organosiloxane (2) ayant des atomes d'hydrogène terminaux liés à Si,
en présence du catalyseur (3) favorisant la fixation de l'atome d'hydrogène lié à Si à la liaison double aliphatique,
le rapport utilisé de l'atome d'hydrogène lié à Si dans l'organosiloxane (2) à la liaison double aliphatique dans le composé organique (1) étant de 1,3 à 10,
et en équilibrant, le cas échéant, dans une deuxième étape, les copolymères de siloxane ainsi obtenus,
présentant des atomes d'hydrogène liés à Si avec l'organopolysiloxane (4), sélectionné parmi le groupe constitué des organopolysiloxanes linéaires présentant des groupements triorganosiloxy terminaux, des organopolysiloxanes linéaires présentant des groupements hydroxyles terminaux, des organopolysiloxanes ramifiées, présentant, le cas échéant, des groupements hydroxyles, des organopolysiloxanes cycliques et des polymères mixtes faits à partir d'unités de diorganosiloxanes et de monoorganosiloxanes.

2. Utilisation selon la revendication 1, **caractérisée en ce que** l'on utilise, en tant qu'organosiloxane (2), un ou des organosiloxanes de la formule générale
HR₂SiO (SiR₂O) ₙSiR₂H (II),
R signifiant des radicaux hydrocarbonés identiques ou différents, le cas échéant, halogénés, ayant de 1 à 6 atomes de carbone par radical et
n signifiant 0 ou un nombre entier.

3. Utilisation selon la revendication 2, **caractérisée en ce que** n signifie un nombre entier allant de 50 à 2000.

4. Utilisation selon la revendication 1, 2 ou 3, **caractérisée en ce que** l'on utilise, en tant que composé organique (1), un ou des composés pour lesquels R² signifie un radical hydrocarboné trivalent, ayant de 1 à 25 atomes de carbone par radical et x signifie la valeur 3.

5. Utilisation selon l'une quelconque des revendications 1 à 4, **caractérisée en ce que** l'on utilise, en tant que composé organique (1), le 1,2,4-trivinylcyclohexane.

6. Utilisation selon l'une quelconque des revendications 1 à 5, **caractérisée en ce que** le rapport utilisé de l'atome d'hydrogène lié à Si dans l'organosiloxane (2) à la liaison double aliphatique dans le composé organique (1) est de 1,6 à 3,0.

7. Utilisation selon l'une quelconque des revendications 1 à 6, **caractérisée en ce que** l'on utilise, en tant que composition de revêtement aux silicones réticulable, une ou des compositions contenant
(A) des composés organosilicium, qui présentent des radicaux ayant des liaisons multiples carbone-carbone,
(B) des composés organosilicium ayant des atomes d'hydrogène liés à Si,
(C) des catalyseurs favorisant la fixation de l'atome d'hydrogène lié à Si à la liaison multiple aliphatique et, le cas échéant,
(D) des agents inhibiteurs.

8. Corps moulé fabriqué par réticulation des compositions de revêtement aux silicones réticulable avec formation réduite d'aérosols contenant
(X) des additifs anti-buée selon l'une quelconque des revendications 1 à 6 dans des quantités de 0,5 à 10% en poids, par rapport au poids total de la composition de revêtement aux silicones réticulable,
(A) des composés organosilicium, qui présentent des radicaux ayant des liaisons multiples aliphatiques carbone-carbone,
(B) des organopolysiloxanes ayant des atomes d'hydrogène liés à Si de la formule générale
HₕR⁵₃₋ₕSiO (SiR⁵₂O)ₒ(SiR⁵HO) ₚSiR⁵₃₋ₕHₕ (VI)
R⁵ signifiant un radical hydrocarboné libre monovalent, le cas échéant, substitué, exempt de liaisons multiples aliphatiques carbone-carbone ayant de 1 à 8 atomes de carbone par radical,
h étant 0, 1 ou 2
o étant 0 ou un nombre entier allant de 1 à 1500 et
p étant 0 ou un nombre entier allant de 1 à 200,
sous réserve de ce que, en moyenne, au moins 2 atomes d'hydrogène liés à Si soient présents,
(C) des catalyseurs favorisant la fixation de l'atome d'hydrogène lié à Si sur la liaison multiple aliphatique et, le cas échéant,
(D) des agents inhibiteurs.

9. Corps moulé selon la revendication 8, **caractérisé en ce qu'**il s'agit de revêtements.

10. Corps moulé selon la revendication 8, **caractérisé en ce qu'**il s'agit de revêtements repoussant les substances collantes.

11. Procédé en vue de la fabrication de revêtements par application de compositions réticulables selon la revendication 8 sur des surfaces à revêtir et par réticulation subséquente des compositions.

12. Procédé en vue de la fabrication de revêtements repoussant les substances collantes par application de compositions réticulables selon la revendication 8 sur les surfaces à rendre repoussantes vis-à-vis des substances collantes et par réticulation subséquente des compositions.
